Europäisches Patentamt

(19) European Patent Office

Office européen des brevets

(11) Publication number: **0 056 339**
**B1**

(12) **EUROPEAN PATENT SPECIFICATION**

(45) Date of publication of patent specification: **16.04.86**

(51) Int. Cl.[4]: **G 01 N 27/12**

(21) Application number: **82300194.6**

(22) Date of filing: **14.01.82**

(54) A method of producing a stannic oxide type gas-detecting device.

(30) Priority: **14.01.81 US 224873**

(43) Date of publication of application:
**21.07.82 Bulletin 82/29**

(45) Publication of the grant of the patent:
**16.04.86 Bulletin 86/16**

(84) Designated Contracting States:
**BE DE FR GB IT LU NL**

(56) References cited:
**EP-A-0 005 481**
**AT-B- 338 217**
**GB-A-2 027 729**

**Patent Abstracts of Japan Vol. 3, No. 9, 26 January 1979 page 48E86**

**IEEE TRANSACTIONS ON ELECTRON DEVICES Vol. ED-26, No. 3, March 1979 M. NITTA et al. "Oscillation Phenomenen in Thick-Film Co Sensor" pages 219 to 223**

**IEEE TRANSACTIONS ON ELECTRON DEVICES Vol. ED-26, no 3 (1979) pages 247-249**

(73) Proprietor: **WESTINGHOUSE ELECTRIC CORPORATION**
**Westinghouse Building Gateway Center Pittsburgh Pennsylvania 15222 (US)**

(72) Inventor: **Yannopoulos, Lymperios Nicholas**
**1617 Old Beulah Road**
**Pittsburgh Pennsylvania (US)**
Inventor: **Hirayama, Chikara**
**4437 Kilmer Drive**
**Murrysville Pennsylvania (US)**

(74) Representative: **van Berlyn, Ronald Gilbert**
**23, Centre Heights**
**London, NW3 6JG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates generally to a method of producing gas detecting devices, and more particularly to a method of producing such devices which detect reducing-gas constituents such as carbon monoxide and hydrogen gas.

The selective detection of CO and $H_2$ gas constituents by a stannic oxide ($SnO_2$) element has been the topic of technical papers and publications. The stannic oxide element corresponds to an n-type semiconductor oxide which exhibits changes in electrical resistivity on exposure to gases such as $H_2$ and CO. This oxide responds primarily to $H_2$ in the temperature range of 200—250°C when it is intimately mixed with small amounts of a sintering agent such as MgO and a catalyst such as $PdCl_2$. When small amounts of $ThO_2$ are added to the above oxide the surface activity is shifted towards CO gas. To the latter formulation, in the incorporation of small amounts of hydrophobic (water repellant) $SiO_2$ to remove water from contact with the stannic oxide enhances the sensitivity of the element to CO.

Publications describing thick film sensors, which are incorporated herein by reference include:

1) Thick-Film CO Gas Sensors, by Nitta et al., appearing in IEEE Transactions on Electron Devices, March, 1979, pp. 247—249;

2) CO Gas Detection by $ThO_2$—Doped $SnO_2$, by Nitta et al, appearing in Journal of Electronic Materials, Vol. 8, No. 5, 1979, pp. 571—580);

3) Patent Abstracts of Japan, Vol. 3, No. 9, 26 January 1979, page 48E86, Abstract related to JP—A—53—135 699.

4) EP—A—0 005 481.

Although electrical resistivity changes which are detected in semiconductor oxides occur inside the surface of the semiconductor, they are induced by the electric charge of the surface. This charge resides in surface states or in additional allowed energy levels. These energy levels arise as a result of several causes including the adsorption of foreign atoms or molecules. If these surface adsorbed atoms or molecules are catalyzed to react with a gas or a mixture of gases and removed from the surface, then, a change in the resistivity of the semiconductor oxide is detectable. The magnitude of this change is a function of the concentration of the removed surface-adsorbed-atoms or molecules and, thus is a function of the catalytically active gas. Under certain conditions, these catalytic surface reactions selectively involve only one reducing gas component in a mixture of gases. This selectivity is achieved by appropriate additives to the semiconductor oxide.

It has been determined experimentally that the substitution of a rare earth oxide, such as lanthanum oxide, which exhibits a greater hydrophobic effect than thorium oxide, for the thorium oxide in the published stannic oxide gas sensor will render the stannic oxide gas-sensor more sensitive to CO (cf. the above mentioned patent abstract).

Further, the process of fabricating a thick film semiconductor sensor for $H_2$ and CO has been improved by adding the catalyst to a stannic oxide solution to assure optimum distribution of the catalyst in the matrix of the final semiconductor film sensor. While the prior art discusses the use of palladium chloride ($PdCl_2$) as the catalyst, it has been determined experimentally that the use of $RuCl_3$ and $PtCl_2$ in amount of between 1 and 5 mole percent enhances the catalytic action of the semiconductor oxide sensor thus increasing the sensitivity of the sensor.

While the stannic oxide sensor provides gas-monitoring in temperatures of between approximately 200 and 250°C, the application of the stannic oxide sensor in higher temperature environments which would be encountered in various combustion processes would result in the stannic oxide assuming the characteristics of an insulator.

The invention recites broadly in a method of producing a stannic oxide type gas-detecting-film-device selectively responsive primarily to $H_2$ and CO present in an oxygen containing gas environment with increased sensitivity to CO comprising the steps of

solution precipitation of $Sn(SO_4)_2$ and $SnO_2$,

thermally decomposing the $Sn(SO_4)_2$ to $SnO_2$,

adding the $SnO_2$ to a catalyst solution of acetone or ethanol,

adding a sintering agent to the catalyst solution containing $SnO_2$ and stirring,

filtering the resulting catalyst doped oxide mixture,

drying the filtered mixture to produce a dry power,

adding $La_2O_3$ to the dried powder,

sintering the mixture of the $La_2O_3$ and the dry powder;

mixing the sintered mixture of $La_2O_3$ and the dry powder with β-terpineol to form a paste,

applying the paste to a non-conductive substrate, and

drying the paste to form a stannic oxide gas detecting film.

The invention will become more readily apparent from the following exemplary description to be read in conjunction with the accompanying drawing:

Figure 1 is a diagram of the process steps of the method according to the invention;

Figures 2A and 2B are schematic illustrations of an embodiment of the device manufactured by the method according to the invention; and

Figures 3, 4 and 5 are graphic illustrations of the operation of devices formulated in accordance with the embodiment of Figures 2A and 2B.

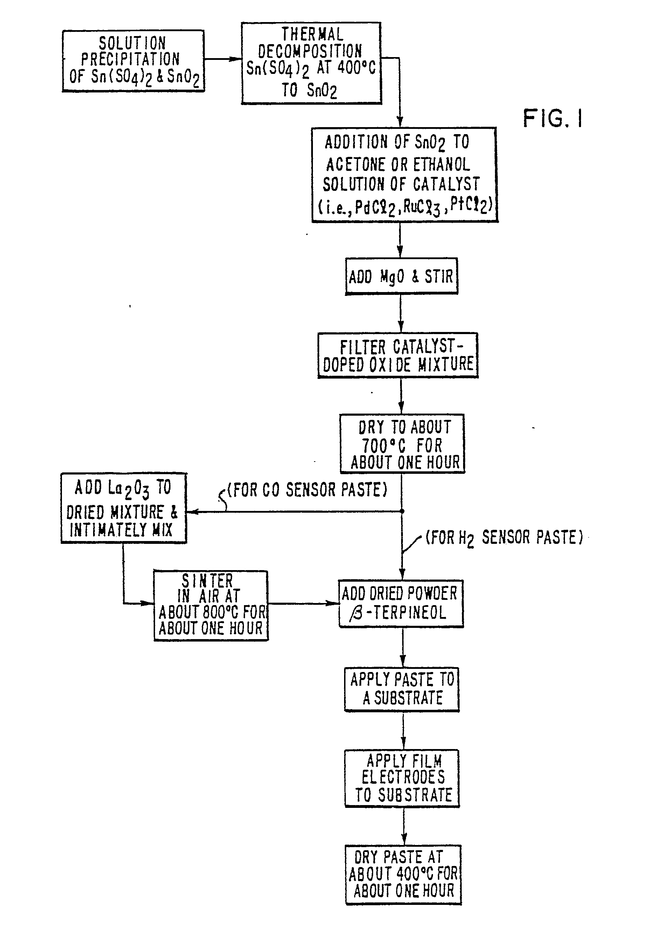

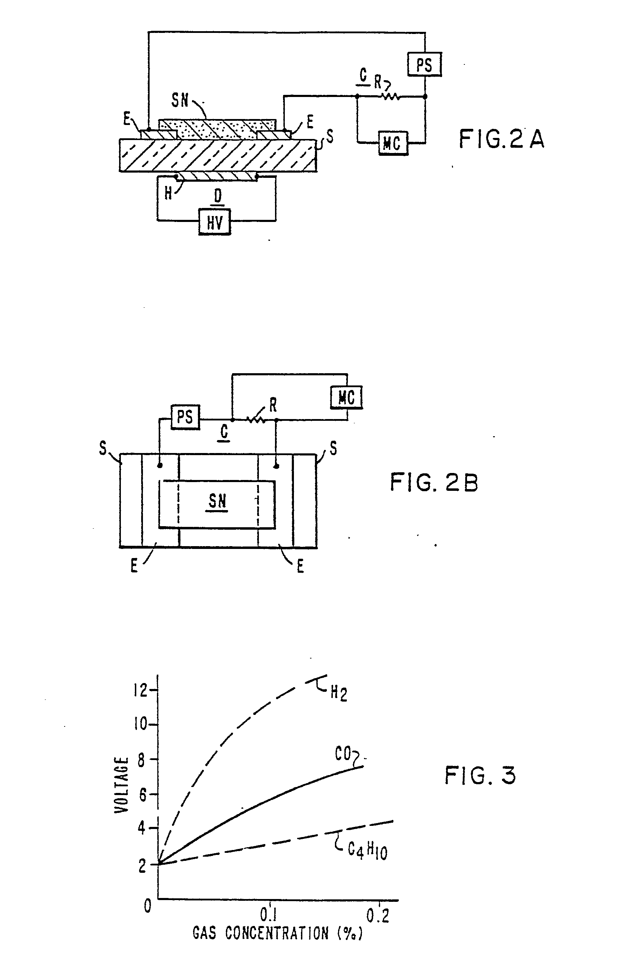

The improved stannic oxide sensor SN, fabricated in accordance with the process steps of Figure 1 and typically illustrated in a gas sensing device D in Figure 2, is realized as a result of a preparation procedure wherein the stannic oxide sensor is developed as a paste through solution processing steps wherein a uniform distribution of the catalyst is achieved by a colloidal suspension during the preparation of the stannic oxide ($SnO_2$) paste.

The physical characteristics of the stannic oxide sensor SN are determined in the preparation process of Figure 1.

In the application of the stannic oxide film as a gas sensor SN to monitor CO and $H_2$, an oxide powder with high surface area is required in order to optimize the efficiency of the gas-surface catalyzed reaction. This condition is achieved in the disclosed gas sensor SN as a result of the formation of stannic oxide by heating the precipitate formed using a precipitation method from a sulfate homogeneous solution. This technique yields a fine precipitate of a mixture of stannic oxide and sulfate. When the sulfate portion is heated to about 400°C it also produces stannic oxide.

The above precipitation is accomplished by the slow hydrolysis of the urea $H_2N—CO—NH_2$. This slow hydrolysis permits an initial slow rise of the pH of the solution and controls both the rate and the size of the precipitate.

It has been determined experimentally that 0.25 grams of tin (Sn) is precipitated as basic stannic sulfate by heating to a boiling condition a solution of 50 grams of urea, 50 milliliters of sulfuric acid ($H_2SO_4$), 2 grams of ammonium sulfate [$(NH_4)_2SO_4$], and sufficient hydrochloric acid (HCl) to furnish an initial pH of 0.50. This solution was contained in a 400 ml volume. The solution is rapidly heated to boiling and then transferred to an air bath heater designed to heat most of the liquid portion. The solution is then boiled for about $2\frac{1}{2}$ hours while taking precautions to minimize bumping and maintaining the liquid level through the addition of distilled water. The pH of the precipitate resulting from this process is approximately 1.3.

It has been further determined in developing a gas sensor SN from the stannic oxide material that a uniform distribution of the catalyst within the stannic oxide film significantly enhances the sensitivity of the film thus making it a valid candidate for a gas sensor device. The catalyst, which is typically a noble or precious metal, is distributed in the above-processed stannic oxide precipitate, or powder, via solution deposition. The small amounts of the catalyst material required, i.e., 1—5 wt.%, is incorporated by immersing the prepared stannic oxide powder in an acetone or ethanol solution of the precious metal chloride, i.e., $PdCl_2$, $PtCl_2$, or $RuCl_3$. It has been determined experimentally that the immersion technique provides good adherence of the catalyst on the surface of the stannic oxide powder. This enhances the resistivity changes in thick films thus rendering the films suitable as a gas sensing device D when connected with appropriate circuitry as illustrated in Figure 2. The resulting instrument combination provides practical measurements of designated gas constituents. The use of a sintering agent MgO, as disclosed in the prior art, can be employed in developing the gas sensor SN by adding the sintering agent in combination with the catalyst as described above.

The sintering agent is mixed with the catalyst-containing stannic oxide powder. After drying in air at 700°C for about one hour the above said stannic oxide powder mixture material is processed to form a paste of the proper porosity to optimize adsorption and provide the desired gas sensor response time required of a gas measuring device.

The stannic oxide powder composition thus processed is prepared as a paste by using a convenient organic volatile liquid as a vehicle for the preparation of the paste. Typically this can be accomplished by dispersing the sintered stannic oxide powder mixture uniformly in β-terpineol.

The fabrication of the gas sensing device D of Figure 2 is achieved by first applying film electrodes E, which may be typically gold paste, on an inert and non-conducting substrate S which may be typically alumina. Following the application of the spaced-apart electrodes E, a thick film of the stannic oxide sensor paste is applied, or painted, on a surface of the substrate S to effectively bridge the spaced-apart electrodes E. The thickness of the oxide film sensor SN is approximately 200 µm. Following the application of the spaced-apart electrodes E and the subsequent painting of the oxide paste SN, the combination of the substrate S, the electrodes E and the sensor SN is heated to approximately 400°C for 1 hour. The electrode films E can be printed on the substrate S and pre-fired at temperatures approximating 800°C for 10 minutes.

The degree of combustion of a fuel gas mixture is related to the total concentration of the reducing gas, i.e., $H_2$, CO, etc., and the combustion product gases. More accurately it relates to the thermal chemical reduction potential in the combustion product. This reduction potential of the fuel gas mixture is related to the amount of adsorbed oxygen on the surface of the semiconductor stannic oxide sensor SN that was removed by reaction with the reducing gases. This reaction is induced catalytically by the ingredients of the sensor SN when the sensor SN is heated to a predetermined temperature. The degree of removal of the adsorbed oxygen is monitored by the circuit C as a change in the electrical resistivity of the sensor SN. The preferred operating temperature of the sensor SN as an element in the gas measuring device D for the above-prepared stannic oxide film is in the range of between approximately 200°C and 250°C. This temperature corresponds to the temperature at which the catalyst of the sensor composition is most effective to catalyze the surface reaction that produces the maximum change in electrical resistivity. This operating temperature can be achieved through the use of numerous heating techniques but a preferred technique is disclosed to be a film heater H secured to the substrate S and receiving excitation from a heater voltage source HV. The film heater H can be implemented through the use of resistance film compositions such as $NiCr_2O_4$ and $PbRuO_3$ which typically require electrical excitation in the range of approximately 1—2 volts to produce the desired temperature of between 200 and 250°C. The semiconductor stannic oxide film sensor SN is monitored by an EMF measuring circuit MC as a function of a change in voltage across the resistor R of the circuit C. The resistor R, is connected in series with a DC power supply PS, and exhibits an initial resistance value which can be preset to a predetermined level in the absence of a fuel reducing gas mixture. On exposing the sensor SN of the gas measuring device D to a reducing gas mixture, the changes in the voltage as measured by the EMF measuring circuit MC are indicative of the fuel reducing constituents of the gas mixture G.

The proportionality between electrical resistivity decrease and reduction potential of a fuel-type gas such as $H_2$, CO, etc. is illustrated in Figure 3. Figure 3 illustrates the measured voltage across the resistor R as a function of gas concentration at about 200°C and an applied voltage of 22 volts dc from the power source PS. Under certain conditions, the response of the device D will be selective by orders of magnitude towards one fuel constituent in the fuel gas mixture. The graphical illustration in Figure 3 shows data where the film detector SN is more sensitive towards $H_2$. Under conditions where the influence of adsorbed water vapor on the semiconductor oxide film detector SN is minimized, the device D becomes more sensitive towards CO. The addition of approximately 5 wt.% $ThO_2$ and 5 wt.% hydrophobic $SiO_2$ powders to the stannic oxide powder composition during the above processing produces a semiconductor oxide film which is selectivity responsive to CO. While $ThO_2$ has been shown to be an attractive ingredient for trapping water away from the stannic oxide, thus rendering the film detector sensitive to CO, it has been determined experimentally that the substitution of a rare earth oxide for $ThO_2$ improves the adsorption of water vapor thus increasing the sensitivity of the semiconductor oxide film to CO. In particular, lanthanum oxide ($La_2O_3$) has been shown to be more hydroscopic than $ThO_2$ and when added to the semiconductor oxide powder in amount of approximately 5% in place of the combination of $ThO_2$ and $SiO_2$ it will enhance the · sensitivity of the semiconductor oxide film to CO.

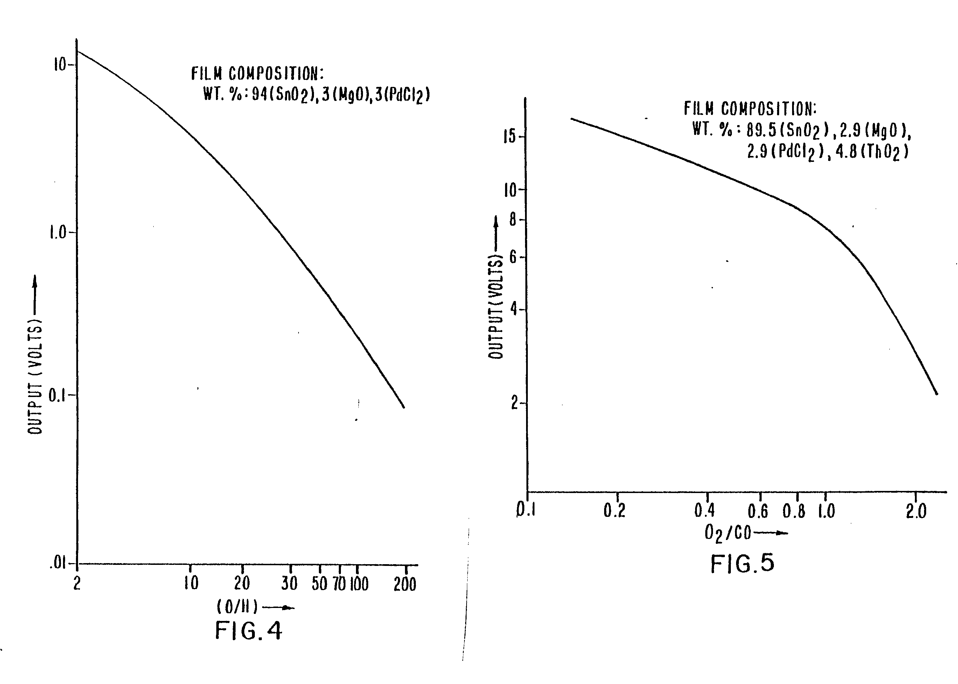

Figure 4 illustrates the thick film device detection voltage versus oxygen/hydrogen ratio at 220°C and 22 volts dc for a specific film composition. Figure 5 illustrates the thick film device detection voltage versus oxygen/carbon monoxide ratio at 220° and 22 volts dc for a specific film composition.

The simple construction of the above film sensors, and the packaging of the film sensors with battery power packs produces a much needed gas measuring device for providing control information in fuel-oxygen industrial processes.

## Claims

1. A method of producing a stannic oxide type gas-detecting-film-device selectively responsive primarily to $H_2$ and CO present in an oxygen containing gas environment with increased sensitivity to CO comprising the steps of,

solution precipitation of $Sn(SO_4)_2$ and $SnO_2$,

thermally decomposing the $Sn(SO_4)_2$ to $SnO_2$,

adding the $SnO_2$ to a catalyst solution of acetone or ethanol,

adding a sintering agent to the catalyst solution containing $SnO_2$ and stirring,

filtering the resulting catalyst doped oxide mixture,

drying the filtered mixture to produce a dry powder,

adding $La_2O_3$ to the dried powder,

sintering the mixture of the $La_2O_3$ and the dry powder,

mixing the sintered mixture of $La_2O_3$ and the dry powder with β-terpineol to form a paste,

applying the paste to a non-conductive substrate, and

drying the paste to form a stannic oxide gas detecting film.

2. A method as claimed in claim 1 wherein said step of thermally decomposing occurs at about 400°C, said step of drying the filtered mixture occurs at about 700°C in about one hour, and said step of drying the paste occurs at about 400°C in about one hour.

## Patentansprüche

1. Verfahren zur Herstellung eines Zinnoxid-Gas-Schichtfühlers, der selektiv im wesentlichen auf $H_2$ und CO in einer sauerstoffhaltigen Gasumgebund mit erhöhter Empfindlichkeit gegenüber CO anspricht, enthaltend die folgenden Verfahrensschritte:

— Ausfällen von $Sn(SO_4)_2$ und $SnO_2$ aus der Lösung,

— thermische Zersetzung des $Sn(SO_4)_2$ in $SnO_2$,

— Beigeben des $SnO_2$ zu einer Katalysatorlösung aus Aceton oder Äthanol,

— Beigeben eines Sintermittels zur $SO_2$ enthaltenden Katalysatorlösung und Rühren,

— Filtern der entstehenden mit dem Katalysator dotierten Oxidmischung,

— Trocknen der gefilterten Mischung, um ein trockenes Pulver zu erzeugen,

— Beigeben von $La_2O_3$ zum getrockneten Pulver,

— Sintern der Mischung aus $La_2O_3$ und dem trockenen Pulver,

— Mischen der gesinterten Mischung aus $La_2O_3$ und dem trockenen Pulver mit β-Terpineol, um eine Paste zu erhalten,

— Aufbringen der Paste auf ein nichtleitendes Substrat und

— Trocknen der Paste, um eine Zinnoxid-Gasfühlerschicht zu bilden.

2. Verfahren nach Anspruch 1, bei dem

— der Schritt der thermischen Zersetzung bei ungefähr 400°C erfolgt,
— der Schritt des Trocknens der gefilterten Mischung bei ungefähr 700°C in ungefähr einer Stunde und
— der Schritt des Trocknens der Paste bei ungefähr 400°C in ungefähr einer Stunde erfolgen.

**Revendications**

1. Procédé de fabrication d'un dispositif à film détecteur de gaz du type oxyde stannique réagissant de façon sélective principalement à H$_2$ et CO présents dans un environnement gazeux contenant de l'oxygène avec une sensibilité accrue au CO, comprenant les étapes de,
  précipitation de Sn(SO$_4$)$_2$ et SnO$_2$ à partir d'une solution,
  décomposition thermique de Sn(SO$_4$)$_2$ en SnO$_2$,
  addition de SnO$_2$ à une solution dans l'acétone ou l'éthanol d'un catalyseur,
  addition d'un agent de frittage à la solution de catalyseur contenant SnO$_2$ et agitation,
  filtration du mélange résultant d'oxyde dopé au catalyseur,
  évaporation du mélange filtré pour préparer une poudre sèche,
  addition de La$_2$O$_3$ à la poudre séchée,
  frittage du mélange de La$_2$O$_3$ et de poudre sèche,
  mélange du mélange fritté de La$_2$O$_3$ et de poudre sèche avec du β-terpinéol pour former une pâte,
  application de la pâte à un support non conducteur, et
  séchage de la pâte pour former un film à l'oxyde stannique détecteur de gaz.

2. Procédé selon la revendication 1 dans lequel l'étape de décomposition thermique a lieu à environ 400°C,
  l'étape de séchage du mélange filtré a lieu à environ 700°C en une heure environ, et
  l'étape de séchage de la pâte a lieu à environ 400° en environ 1 heure.

FIG. I

FIG. 2 A

FIG. 2 B

FIG. 3

2

FILM COMPOSITION:
WT. %: 89.5 (SnO2), 2.9 (MgO), 2.9 (PdCl2), 4.8 (ThO2)

FIG.5

FILM COMPOSITION:
WT. %: 94 (SnO2), 3 (MgO), 3 (PdCl2)

FIG.4